# EUROPEAN PATENT SPECIFICATION

(11) **EP 3 851 244 B1**
(45) Date of publication and mention of the grant of the patent: **30.11.2022**
(21) Application number: 21151600.0
(22) Date of filing: 14.01.2021
(51) Int. Cl.: B23Q 39/02, B23Q 1/01, B23Q 1/48

(54) **A NUMERICALLY CONTROLLED TURNING CENTER WITH A GANTRY STRUCTURE**
NUMERISCH GESTEUERTES DREHZENTRUM MIT PORTALSTRUKTUR
TOUR À COMMANDE NUMÉRIQUE DOTÉ D'UNE STRUCTURE DE PORTIQUE

(30) Priority: 16.01.2020 IT 202000000712
(43) Date of publication of application: 21.07.2021
(73) Proprietor: PAOLINO BACCI S.R.L., 56021 Cascina (PI) (IT)
(72) Inventor: BACCI, Giuseppe, 56025 Pontedera (Pi) (IT); BACCI, Nino, 56025 Pontedera (Pi) (IT); BACCI, Paolo, 56025 Pontedera (Pi) (IT)
(74) Representative: Mannucci, Michele

(56) References cited:
- WO-A1-92/15425
- WO-A1-03/057400
- GB-A- 2 178 991
- JP-A- S63 200 937
- US-A1- 2009 095 126
- US-B1- 7 386 362

## Description

### TECHNICAL FIELD

The present invention concerns the field of numerically controlled machine tools. More in particular, the invention concerns improvements to numerically controlled turning centers, i.e., machines capable of carrying out turning operations automatically, under the control of a suitably programmed control unit, which controls machining movements on a plurality of numerically controlled axes.

Embodiments described herein are configured in particular for turning operations of elongated workpieces, for example in wood, plastic or light alloys, such as, by way of non-limiting example, components of furniture in general, chairs, tables and other furnishing elements, components of stairs or the like, usually of elongated shape with rectilinear or curvilinear axes.

### BACKGROUND ART

Machining of elongated components, which require to be rotated about a support and rotation axis, is typically carried out in turning centers equipped with a pair of support and rotation members, commonly comprising a motorized headstock and a tailstock. Machining heads placed around the support and rotation axis of the workpieces to be machined carry machining tools that are selectively brought into the machining position against the workpiece supported between headstock and tailstock. Various numerically controlled approach and forward movements along a suitable number of numerically controlled axes are possible between workpiece being machined and tools.

These turning centers currently have some drawbacks, for example due to the difficulty of collecting and removing machining chips. Moreover, prior art turning centers are relatively limited in relation to the amount and type of machining operations that can be carried out. Furthermore, they have limits with regard to the number of workpieces that can be machined in each machining cycle.

To carry out turning operations on large workpieces the members for supporting and rotating the workpieces, and the machining tools and the related machining heads must be sized accordingly. Therefore, the turning center sized to machine large workpieces is utilized inefficiently when used to machine smaller workpieces. On the other hand, in industrial production, small workpieces are much more numerous than large workpieces. This means that those who invest in a turning center for large workpieces, which consequently has a relatively high cost, will often find themselves operating the turning center below its capacities, consequently extending the time necessary to amortize the cost of the turning center.

JP63-200937 discloses a machining center with a horizontal bed, on which two headstock and tailstock pairs are arranged, to support two workpieces to be machined. The two workpieces are supported with a high mutual center-to-center distance, to allow a single tool to machine the two workpieces separately. The tool is carried by a single machining head that translates along a cross member of a gantry structure. The cross member is oriented at 90° with respect to the rotation axes of the headstock and tailstock pairs. The headstocks and tailstocks are carried by a slide movable on the bed in a direction orthogonal to the cross member on which the machining head is mounted. The chips produced during machining collect on the slide which carries the headstock and tailstock pairs.

This prior art machining center has considerable drawbacks, among other things due to the length of the machining cycles and to the difficulty in removing the chips produced during machining. Moreover, it is capable of carrying out only a few kinds of machining operations on the workpieces.

Therefore, it would be advantageous to provide numerically controlled turning centers that totally or partially overcome one or more of the problems of prior art turning centers.

### SUMMARY

According to one aspect, there is provided a numerically controlled turning center, comprising a load-bearing gantry structure, with a horizontal cross member and two uprights. Along the cross member is a first slide movable according to a first numerically controlled translation axis. The turning center further comprises a first machining head carried by the first slide and provided with a first downward facing rotary tool for chip removal machining. The turning center further comprises a second slide, positioned under the cross member and movable along a second horizontal, preferably numerically controlled translation axis orthogonal to the first numerically controlled translation axis. A support and rotation unit, adapted to support a workpiece to be machined and to impart a rotation movement thereto, is carried by the second slide and comprises a first pair of support and rotation members for a workpiece to be machined, aligned with each other along a first rotation axis parallel to the cross member and positioned lower than this member. The pair of support and rotation members can typically comprise a motorized headstock and an idle tailstock. The first machining head is provided with a lowering and lifting movement for moving toward and away from the support and rotation unit, so as to carry the tool of the machining head to act on the lateral surface of a workpiece supported by the support and rotation unit and rotated by the support and rotation members about the rotation axis thereof.

In this way a compact structure is obtained, with an optimal arrangement of the mutual movement axes between tool and workpiece being machined. Moreover, as will be apparent from the following description of an embodiment, collection of the chips obtained from machining, which collect in a limited area under the support and rotation unit, is optimized.

In the present description and in the appended claims, the terms "vertical" and "horizontal" refer to the condition in which the turning center is in operating position. The direction indicated as "vertical" is a direction parallel to the direction of the force of gravity, while the direction indicated as "horizontal" is a direction orthogonal to the direction of the force of gravity.

In a particularly advantageous embodiment of the turning center, the support and rotation unit comprises a second pair of support and rotation members for a workpiece to be machined, aligned with each other along a second rotation axis, parallel to the first rotation axis.

The support and rotation members can be controlled so as to carry out angular movements, i.e., rotations about their respective axes, different for the two pairs of support and rotation members, or to carry out the same angular movements, simultaneously, or staggered in time. Therefore, in general, according to some embodiments, the motorized headstocks of each pair of support and rotation members can be controlled by a control unit so as to carry out different angular movements in different times, or so as to carry out the same movements simultaneously.

With this arrangement, it is possible to machine workpieces with very variable sizes on the same turning center. When the workpiece is very large, it is machined individually, while with smaller workpieces two workpieces can be machined simultaneously.

When the turning center comprises two pairs of support and rotation members, with respective rotation axes, the first rotation axis of the first pair of support and rotation members and the second rotation axis of the second pair of support and rotation members can advantageously lie on a substantially horizontal plane, underneath the cross member.

At least one of the first pair of support and rotation members and second pair of support and rotation members is retractable in an idle position, for example with a pneumatically controlled retraction system. Preferably, both pairs of support and rotation members can be retractable.

With the configuration of the turning center according to the present invention, the chips formed by machining collect mainly under the support and rotation unit of the workpieces being machined. Here a conveyor can advantageously be provided to collect the machining chips. In some embodiments, the conveyor can extend and move in a direction substantially parallel to the cross member, i.e., parallel to the first numerically controlled translation axis. In other embodiments, the conveyor can have a width such as to cover the whole of the machining area of the machining heads and move parallel to the second numerically controlled translation axis. In yet further embodiments, for example if the conveyor moves parallel to the second numerically controlled translation axis, it can consist of a plurality of conveyors side by side, each of a width smaller than the size of the machining area of the machining heads in the direction of the first numerically controlled translation axis.

In practical embodiments, the rotary tool carried by the first machining head rotates about an axis oriented at approximately 90° with respect to the first rotation axis of the first pair of support and rotation members and approximately parallel to the second numerically controlled translation axis.

To obtain a greater flexibility and allow a larger number of turning operations to be carried out, in advantageous embodiments the turning center comprises a second machining head and optionally further machining heads. Each machining head, in addition to the first one, comprises its own rotary tool for chip removal machining and has a lowering and lifting movement for moving toward and away from the support and rotation unit. The various tools can rotate about horizontal axes, which can be parallel or perpendicular to the axis of the first pair of support and rotation members of the workpieces. For example, the machining heads can comprise milling cutters, such as cylindrical milling cutters, sanding or polishing belts, circular cutting blades, or the like.

When the turning center comprises a plurality of machining heads, these can all be mounted on the same slide, movable along the first numerically controlled translation axis, parallel to the cross member. Each machining head can be movable, with respect to the first slide, independently from the other machining heads, to carry out the lowering and lifting movement. This vertical movement can be a numerically controlled movement.

In some embodiments, one, some or all the tools of the machining heads can also be provided with a movement parallel to the rotation axis of the tool. When the tool comprises a sanding belt or other endless flexible member, the rotation axis can be meant as rotation axis of one of the rollers around which the endless flexible member is guided.

In some embodiments, the turning center can further comprise an electrospindle for a further rotary tool, rotating about an axis adapted to take an orientation orthogonal to the first translation axis and to the second translation axis. The electrospindle can have a tool-holder adapted to receive a boring bit, a straight cutter or the like. These tools can be provided with a forward movement parallel to their rotation axis.

To be able to carry out machining operations according to variable inclinations, the electrospindle can be provided with at least one numerically controlled rotation axis, which allows the rotation axis of the electrospindle to oscillate to take variable inclinations about the numerically controlled axis. This numerically controlled axis can be horizontal. It would also be possible for the electrospindle to be provided with a double numerically controlled rotation movement, about two axes preferably orthogonal to each other, in particular a horizontal axis and a vertical axis.

The electrospindle is also advantageously provided with a lowering and lifting movement to move toward and away from the support and rotation unit and with a numerically controlled translation movement parallel to the cross member. For this purpose, the electrospindle can be carried by the first slide, so as to move along the first numerically controlled translation axis. In some embodiments, the electrospindle is in turn carried by a slide or carriage movable vertically with respect to the first slide, to carry out lowering and lifting movements.

The second slide, which carries the support and rotation unit of the workpieces to be machined can be guided movably along guides, extending in the direction of the second numerically controlled translation axis, integral with a base positioned under, or in any case lower than, the cross member.

In order to increase the number of possible machining operations that can be carried out on the workpieces, in some embodiments the turning center can comprise a third slide, movable parallel to the second slide and adapted to translate under the cross member. The movement of the second slide and of the third slide are controlled according to two numerically controlled translation axes independent from and parallel to each other, so that the two slides can move toward and away from each other and take, at different times from each other, a same position with respect to the load-bearing structure and to the machining heads supported thereby. The third slide can advantageously comprise support and blocking members of the workpieces to be machined adapted to leave the ends of the workpieces to be machined free.

The third slide can be movable along own guides, separate and different from the guides on which the second slide moves. However, to obtain a more compact and cost-effective structure, the second and the third slide are preferably movable along a common guide. In both cases, the guide or guides can be integral with a common bed that extends beyond the gantry structure, on a side of the gantry structure opposite the side on which the first machining head is carried.

To carry out further machining operations on the workpieces, in particular when these are on the third slide, in some embodiments a machining unit comprising at least one spindle movable according to a plurality of numerically controlled axes is carried on the cross member. The machining unit can advantageously be carried on the side of the cross member opposite the side on which the first machining head is carried and be movable according to a numerically controlled translation axis parallel to the cross member.

The spindle of the machining unit can be movable about at least one numerically controlled rotation axis and preferably about two numerically controlled rotation axes not parallel to each other, for example with a vertical axis and a horizontal axis. Moreover, the spindle is preferably movable along one and more preferably two numerically controlled translation axes, preferably orthogonal to each other, one of which can be parallel to the cross member.

Further advantageous features and embodiments are described hereunder and defined in the appended claims.

### BRIEF DESCRIPTION OF THE DRAWINGS

The invention will be better understood by following the description and the accompanying drawings, which illustrate non-limiting examples of embodiments of the invention. More in particular, in the drawing:
Fig.1 shows a front view according to I-I of Fig.2 of a turning center in an embodiment;
Fig.2 shows a plan view according to II-II of Fig.1;
Fig.3 shows a section according to III-III of Fig.2;
Figs.4(A) and 4(B) show sections according to the line IV-IV of Fig.1 in two operating conditions;
Figs.5(A) and 5(B) show sections according to the line V-V of Fig.1 in two operating conditions;
Figs.6(A) and 6(B) show sections according to the line VI-VI of Fig.1 in two operating conditions;
Fig.7 shows a view according to VII-VII of Fig.8 of a turning center in another embodiment;
Fig.8 shows a plan view according to VIII-VIII of Fig.7;
Fig.9 shows a section according to IX-IX of Fig.8; and
Fig.10 shows a view according to X-X of Fig.9.

### DETAILED DESCRIPTION OF EMBODIMENTS

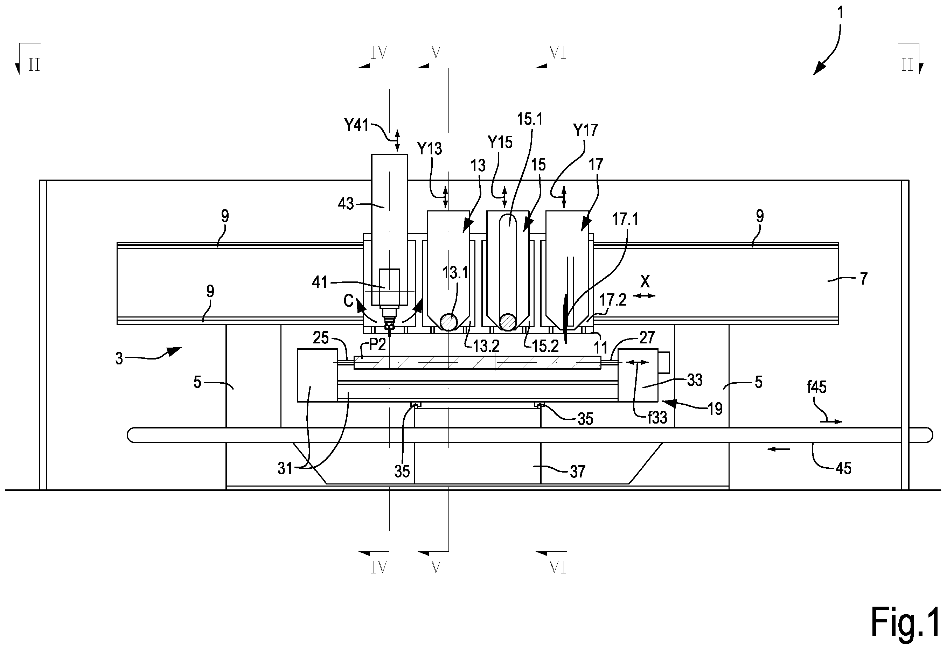

### Embodiment of Figs. 1 to 6

An embodiment of a turning center is illustrated in Figs. 1 to 6. The turning center is indicated as a whole with 1. In the illustrated embodiment, the turning center 1 comprises a load-bearing gantry structure 3. The gantry structure 3 comprises two uprights 5 and a horizontal cross member 7.

Horizontally extending guides 9 are provided on one side of the cross member 7. A first slide 11 is movable along the guides. The first slide 11 moves according to a first numerically controlled translation axis indicated with X.

In some embodiments, the first slide 11 carries at least one machining head, which is equipped with at least one tool for chip removal. In the embodiment illustrated in Figs. 1 to 6, three machining heads indicated with 13, 15 and 17 are provided on the first slide 11. Reference numbers 13.1, 15.1 and 17.1 indicate three rotary tools for chip removal carried respectively by the machining head 13, by the machining head 15 and by the machining head 17.

By way of example, in the particularly advantageous embodiment illustrated in Figs. 1 to 6, the first rotary tool 13.1 can be a milling cutter, for example a cylindrical milling cutter with a horizontal rotation axis orthogonal to the direction of movement of the first slide 11 according to the first numerically controlled translation axis X.

The second rotary tool 15.1 can comprise a sanding belt that can be guided around two guide rollers, one of which is motorized. The guide rollers of the sanding belt can be arranged with their rotation axes horizontal and orthogonal to the first numerically controlled translation axis X.

The machining heads 13, 15, 17, and more precisely their machining tools 13.1, 15.1, 17.1 can machine one or two workpieces indicated with P1 and P2, carried by a support and rotation unit 19. As will be described in detail hereunder, the support and rotation unit 19 is adapted to selectively support a single workpiece P or two, preferably identical, workpieces PI, P2. In some embodiments, when two workpieces to be machined are carried simultaneously by the support and rotation unit, said workpieces can rotate about their own axis independently from each other.

To support alternatively a single workpiece P or two workpieces PI, P2 to be machined, the support and rotation unit 19 comprises a first pair of support and rotation members and a second pair of support and rotation members. The two support and rotation members of each pair are aligned with each other along a respective rotation axis.

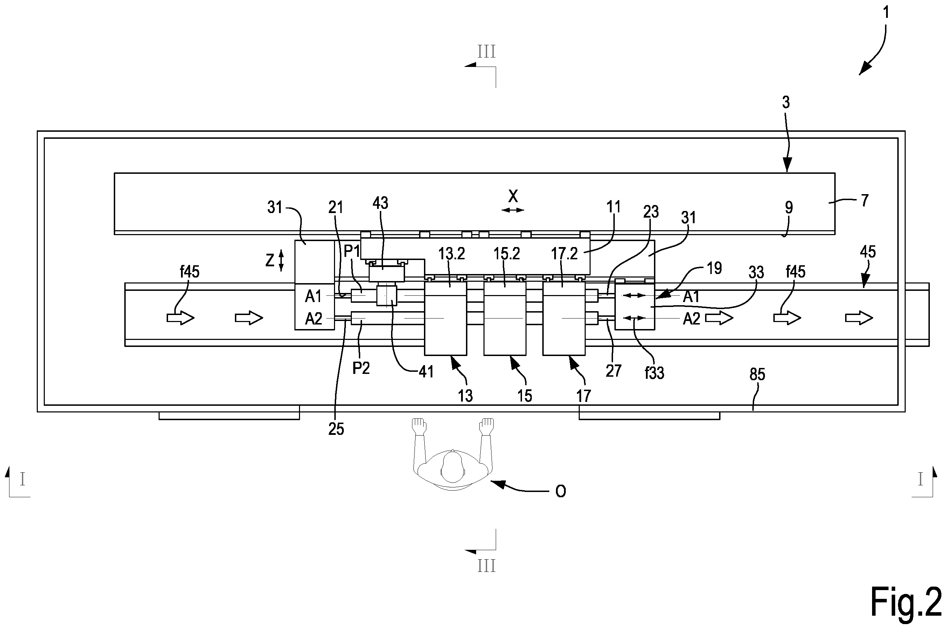

With specific reference to Fig.2, which shows a plan view of the turning center 1, the first pair of support and rotation members comprises a first headstock 21 and a first tailstock 23, aligned along a first rotation axis A1, forming a first turning axis of the turning center 1. The headstock 21 can be motorized and the tailstock 23 can be idle. When a workpiece P1 is constrained with the ends thereof to the headstock 21 and to the tailstock 23, it can rotate about the axis A1. The rotation movement can be intermittent or continuous.

The second pair of support and rotation members comprises a second headstock 25 and a second tailstock 27, aligned along a second rotation axis A2, forming a second turning axis of the turning center 1, parallel to the axis A1. The headstock 25 can be motorized and the tailstock 27 can be idle. When a workpiece P2 is constrained with the ends thereof to the headstock 25 and to the tailstock 27, it can rotate about the axis A2. Also in this case, the rotation can be intermittent or continuous.

Each headstock 21, 25 can be provided with its own, autonomously controlled rotation motor. In this way, it is possible for each headstock to carry out a rotation movement different from that of the other headstock. By controlling the two motors synchronously, the two headstocks can also carry out exactly the same movements.

In other embodiments, a single motor, which imparts the same movement to the two headstocks 21, 25 simultaneously, can be provided. In this case, the two headstocks generally move synchronously, losing the possibility of carrying out different movements to each other.

It must be understood that this second option can be less flexible, as it offers fewer machining possibilities, in exchange for a lower cost and less complex machine. Moreover, in most cases when two workpieces are positioned on the two pairs of support and rotation members, these workpieces are subjected to identical machining operations and therefore in these cases a single drive motor is sufficient.

The movement of the drive motor or motors of the headstocks 21, 25 can advantageously be a numerically controlled movement, if controlled rotation angles are required, for example to carry out non-axisymmetric machining operations.

In general, when two workpieces are mounted on the two headstock and tailstock pairs, as will be explained in more detail hereunder, these can be machined simultaneously by a same machining head 13, 15, 17, which is arranged so that the tool thereof acts on both workpieces.

In some embodiments, the two headstock and tailstock pairs can be controlled to rotate synchronously. However, this is not essential. In some other embodiments, for example, the two headstock and tailstock pairs can rotate independently from each other, or only one of said headstock and tailstock pairs can rotate. The two tailstock and head stock pairs can rotate in the same or in opposite directions.

Headstock and tailstock are meant, in the present context, as any pair of members adapted to engage the ends of a workpiece P, P1, P2 to be machined to rotate it about the rotation axis of the headstock and tailstock.

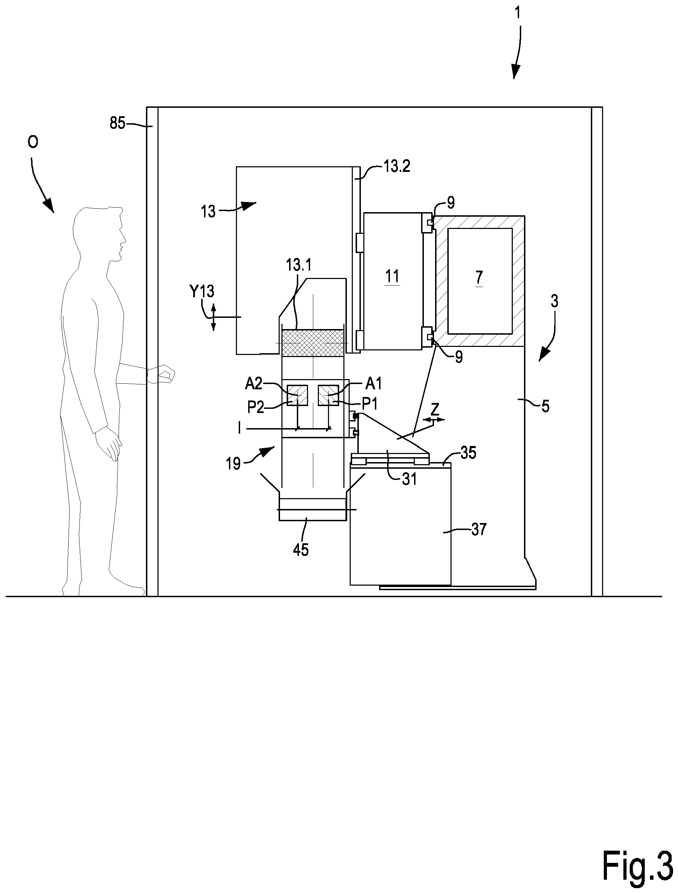

The rotation axes A1 and A2 are parallel to each other, lie on a common plane and are at a center-to-center distance I, as shown in particular in Fig.3. In the embodiment shown the plane on which the rotation axes A1 and A2 lie is horizontal.

In the embodiment illustrated, the headstocks 21, 25 and the tailstocks 23, 27 are carried by a second slide 31. In advantageous embodiments, the mutual distance between each headstock 21, 25 and the respective tailstock 23, 27 can be adjustable. For this purpose, the headstocks and/or the tailstocks can be mounted on the second slide 31 so as to be movable in a direction parallel to the rotation axes A1, A2. In the illustrated embodiment, the tailstocks 23, 27 are carried on an adjustment carriage 33, movable along the double arrow f33 with respect to the second slide 31, while the headstocks 21, 25 are in a fixed position with respect to the second slide 31.

The second slide 31 can be provided with a translation movement along a second, preferably numerically controlled, translation axis Z. For this purpose, the slide 31 can be mounted on guides 35, integral with a bed 37 placed underneath the cross member 7 of the gantry structure 5, as shown in particular in the section of Fig.3.

As shown in Figs.2 to 6, the support and rotation unit 19 is mounted on the slide 31 so that the support and rotation members, in particular the headstock and tailstock pairs 21, 23 and 25, 27, are arranged in a cantilever fashion with respect to the slide 31. Moreover, in the machining position, the support and rotation members, in the example illustrated consisting of the headstock and tailstock pairs 21, 23 and 25, 27 are positioned, by means of the slide 31, so as to be cantilevered with respect to the bed 37. This facilitates collection of the chips produced by machining at the side of the bed 37, preventing chips from falling onto the slides 35.

The movement along the second numerically controlled translation axis Z allows the headstock and tailstock pairs 21, 23 and 25, 27 to be moved with respect to the first slide 11. More in particular, the direction of the movement along the second numerically controlled translation axis Z is orthogonal with respect to the direction of the movement along the first numerically controlled translation axis X and consequently, in the example illustrated, is orthogonal to the cross member 7.

The numerically controlled axes X and Z allow the workpieces P, P1, P2 and the tools 13.1, 15.1, 17.1 to be moved with respect to one another to carry out the various machining operations required by each specific machining cycle. More in particular, the relative movement along the second numerically controlled translation axis Z allows centering of the tools 13.1, 15.1, 17.1 with respect to one or other of two workpieces PI, P2 constrained on the two headstock 21, 25 and tailstock 23, 27 pairs, or centering of the tool with respect to the two workpieces PI, P2, or centering of the tools with respect to a single workpiece P to be machined, which can be mounted between headstock 21 and tailstock 23, or preferably between headstock 25 and tailstock 27.

A further movement is provided along a third vertical translation axis between the workpieces to be machined P, P1, P2 and the tools 13.1, 15.1 and 17.1 of the machining heads 13, 15 and 17 to move the machining heads toward and away from the workpieces to be machined. This movement is advantageously assigned to the machining heads 13, 15, 17 and can be controlled with a numerically controlled translation axis and preferably with an independent numerically controlled translation axis for each machining head. In other embodiments, the movement on this axis may not be numerically controlled, but can rather be a simple movement between an idle position and a machining position.

In some embodiments, a single actuator can be provided to move all the machining heads, or some of these heads, along this third translation axis. However, in the embodiment illustrated, each machining head 13, 15, 17 is preferably provided with a movement along its own third numerically controlled translation axis. In this way each machining head can move along the third axis independently from the others.

For this purpose, each machining head 13, 15, 17 is mounted on the common slide 11 by means of an own autonomous slide or carriage, indicated with 13.2, 15.2, 17.2 respectively, which have vertical guides engaged with shoes integral with the common slide 11. The third, preferably numerically controlled, translation axis is indicated with Y13 for the machining head 13, with Y15 for the machining head 15 and with Y17 for the machining head 17. The axes Y13, Y15, Y17 are parallel to one another and orthogonal to the axes X and Z described above.

The guides and the shoes that allow the movement between machining head and common slide 11 are shown in particular for the machining head 13 in Fig.3.

As can be seen in Figs.1, 2 and 3, the machining heads 13, 15 and 17 are located in a position over of the support and rotation unit 19. The vertical movement according to the translation axes Y13, Y15 and Y15 is therefore a vertical movement of each single machining head 13, 15, 17 toward and away from the workpieces P, P1, P2 supported between the headstock and tailstock pairs 21, 23 and 25, 27.

In the illustrated embodiment, the turning center 1 further comprises an electrospindle 41, which can be carried by a slide 43. The slide 43 and consequently the electrospindle 41 can be provided, with respect to the workpieces to be machined P, P1, P2, with three translation movements along three axes, preferably orthogonal to one another. The movement along these three axes can be numerically controlled movements. Advantageously, two of the three translation movements are along the first numerically controlled translation axis X (movement assigned to the electrospindle (41) and along the second numerically controlled translation axis Z (movement assigned to the workpieces P, P1, P2 to be machined). These movements can be controlled by the same members described above that move the first slide 11 and the second slide 31. For this purpose, the electrospindle 41 and its slide 43 can be mounted on the first common slide 11, which carries the machining heads 13, 15, 17.

The third translation movement can be a movement according to a vertical axis Y41, parallel to the axes Y13, Y15, Y17. This third movement can be obtained by means of the slide 43 that translates with its guides engaged in shoes integral with the common slide 11. The movement along the axis Y41 is an approach and forward movement, that can serve to carry a tool, for example a boring bit, a straight cutter or the like, to the workpiece P, P1 or P2 and to move the tool forward during the machining operation. The axis Y41 is parallel to the rotation axis of the tool carried by the electrospindle 41.

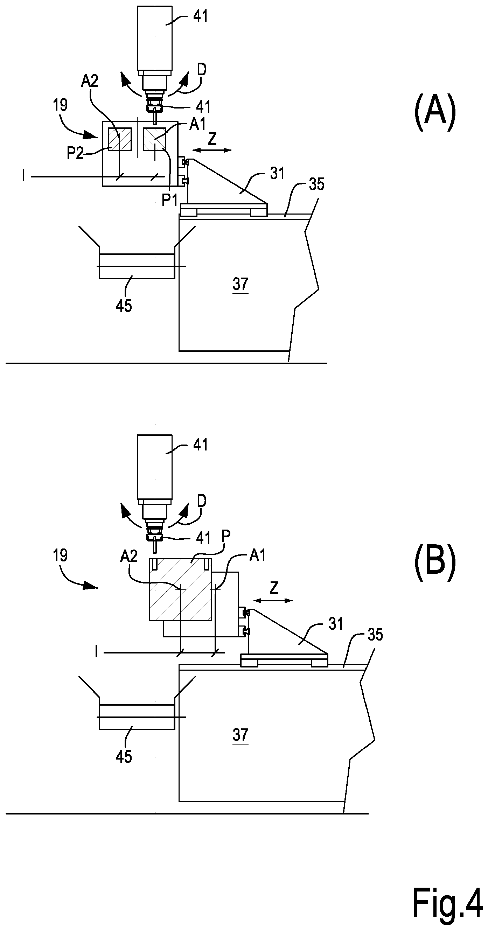

In advantageous embodiments, the electrospindle 41 can be provided with further numerically controlled movements. For example, the electrospindle 41 can be provided with a rotation or oscillation movement about a numerically controlled rotation axis indicated with C. In this case, the rotation axis C is parallel to the direction Z. In some embodiments, the electrospindle 41 can instead be provided with a rotation or oscillation movement about a numerically controlled rotation axis indicated with D (Fig.4) horizontal and parallel to the rotation axes A1, A2 of the headstocks and tailstocks 21, 23 and 25, 27.

In some embodiments the electrospindle 41 has both the rotation movements according to the axes C and D and is therefore provided, with respect to the workpieces P, P1, P2, with a movement along five axes, preferably all numerically controlled, i.e., the translation axes X, Z, Y41 and the rotation axes C and D.

The electrospindle 41 allows machining operations that the machining heads 13, 15, 17 are not able to carry out, for example bores that penetrate laterally into the workpiece to P1 or P2 be machined.

By arranging the support and rotation unit 19 of the workpieces P, P1 and P2 to be machined under the machining heads 13, 15, 17 and under the electrospindle 41, the chips produced by the machining operations can be collected in a simple manner and in a limited area. In fact, these chips collect under the support and rotation unit 19 as a result of gravity and/or as a result of the kinetic energy imparted by the tools of the machining heads.

To collect and remove the chips efficiently, in the illustrated embodiment a conveyor 45 is provided. This conveyor has a forward movement according to the arrow f45 parallel to the rotation axes A1, A2 and to the first translation axis X. Advantageously, the conveyor 45, for example in the form of a conveyor belt, has a length equal to or greater than the travel stroke of the first slide 11, so as to collect the chips produced in any position in which the machining tools of the turning center 1 are located. Due to the aforesaid cantilevered arrangement of the headstock and tailstock pairs 21, 23 and 25, 27 with respect to the second slide 31 and with respect to the bed 37, collection of the chips on the conveyor 45 placed at the side of the bed 37 and their removal are facilitated.

The operation and multiple advantages of the turning center 1 described above will be better understood with reference to Figs. 4(A), 4(B), 5(A), 5(B), 6(A), 6(B), which represent sections along the planes IV-IV, V-V and VI-VI of Fig.1. The figures marked with (A) indicate an operating condition in which two workpieces PI, P2 to be machined in the same machining cycle are mounted on the support and rotation unit 19, while the figures marked with (B) indicate a condition in which the turning center 1 machines a single workpiece P at a time, of larger radial size with respect to the workpieces P1 and P2.

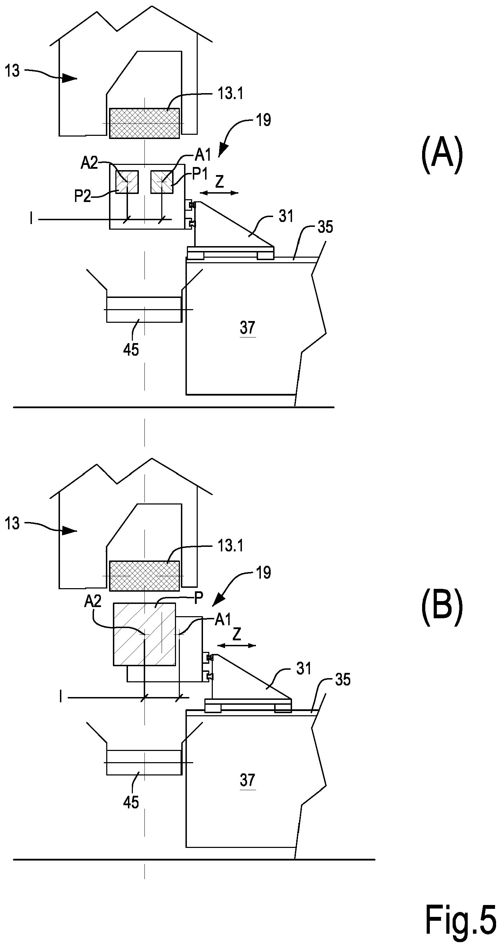

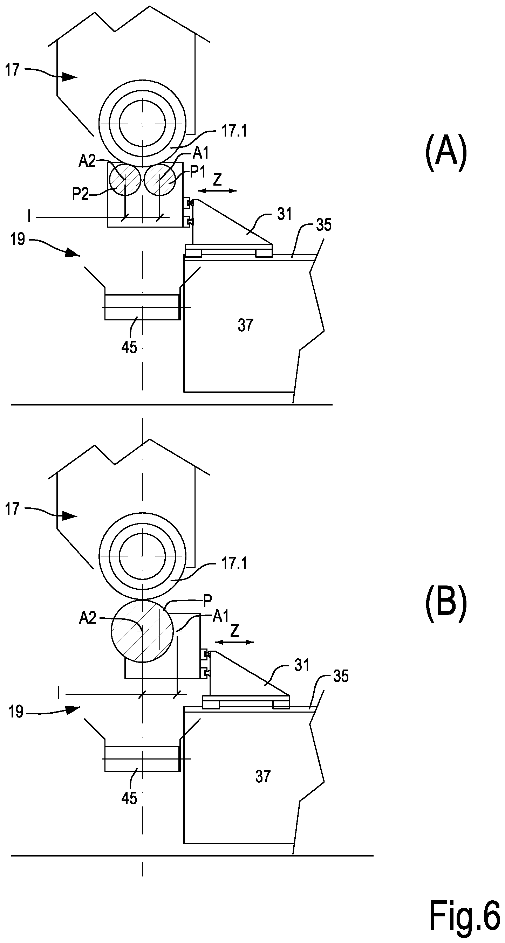

Figs.4(A) and 4(B) show the operating area of the electrospindle 41, Figs. 5(A) and 5(B) show the operating area of the tool 13.1, carried by the slide 13, which in the illustrated example is a milling cutter rotating about a horizontal axis orthogonal to the rotation axes A1, A2. Figs. 6(A) and 6(B) show the operating area of the tool 17.1, which in the illustrated example is a disc cutter rotating about an axis parallel to the rotation axes A1 and A2.

As can be seen in Fig.4(A), when two workpieces P1, P2 to be machined are present simultaneously, these are aligned with the axes A1 and A2 of the pairs of support and rotation members, i.e., of the headstock and tailstock pairs, indicated with 21, 23 and 25, 27, respectively. The electrospindle 41 can carry out machining operations on one or on the other of the two workpieces P1 and P2 by simply moving the second slide 31 along the second numerically controlled translation axis Z, orthogonal to the axes A1, A2 and parallel to the horizontal plane on which said axes A1, A2 lie.

Vice versa, when it is necessary to machine only one workpiece P of larger transverse size (Fig.4(B)), the slide 31 translates along the axis Z by a travel equal to 1/2, where I is the center-to-center distance between the axes A1 and A2 and the workpiece P held between headstock 25 tailstock 27. Alternatively, the workpiece P can also be mounted between headstock 21 and tailstock 23. The electrospindle 41 can perform the machining operations required by the machining cycle on the single workpiece P.

Both when machining a single workpiece P, and when simultaneously machining two workpieces P1, P2, the electrospindle 41 can reach any point of the lateral surface of the workpieces P1, P2 or of the workpiece P with movements along the first numerically controlled translation axis X (movement of the first slide 11) and along the second numerically controlled translation axis Z (movement of the second slide 31), as well as with the rotation about the axes A1, A2 of the workpieces P1, P2, P. The movement according to the translation axis Y41 provides the forward movement of the tool with respect to the workpiece while carrying out a single machining operation, for example a boring operation.

With reference to Fig.5(A), it can be observed that with a suitable length in axial direction, the milling cutter 13.1 can machine the two workpieces P1 and P2 simultaneously. The machining operations can be carried out on the whole surface of the workpieces PI, P2 moving the machining head 13 and the milling cutter 13.1 along the first numerically controlled translation axis X (movement of the slide 11) and rotating the workpieces PI, P2 about the axes A1, A2. The mutual position between milling cutter 13.1 and workpieces PI, P2 in direction Z is such that the centerline of the milling cutter is approximately halfway between the two vertical planes passing through the axes A1 and A2.

Fig.5(B) shows the mutual position between milling cutter 13.1 and single workpiece P retained between headstock 25 and tailstock 27. The slide 31 has been moved along the axis Z by a travel equal to 1/2 and the centerline of the milling cutter 13.1 is aligned with the vertical plane passing through the axis A2.

Operation of the sanding belt 15.1 carried by the machining head is similar to that of the milling cutter 13.1. The sanding belt 15.1 can possibly be provided also with a reciprocating movement parallel to its rotation axis, i.e., to the rotation axis of the rollers around which the sanding belt is guided, to avoid or reduce clogging of the belt by machining waste.

Fig.6A shows the relative position between rotary disc cutter 17.1 carried by the machining head 17 with respect to two workpieces PI, P2 being machined simultaneously. The rotation axis of the rotary disc cutter 17.1, parallel to the rotation axes A1, A2, is positioned on the vertical plane equidistant from the axes A1 and A2. The diameter of the rotary disc cutter 17.1 can be such as to machine the two workpieces P1 and P2 simultaneously.

To machine any point of the lateral surfaces of the workpieces P1, P2 the combination of the movement of the slide 11 along the first numerically controlled translation axis X with the rotation movement of the workpieces PI, P2 about to the rotation axes A1, A2 is used.

Fig.6(B) shows the relative position between the rotary disc cutter 17.1 and a single workpiece P mounted between headstock 25 and tailstock 27. The slide 31 has been translated along the axis Z by a travel equal to 1/2, i.e., half of the center-to-center distance between rotation axes A1, A2 with respect to the position of Fig. 6(A). The rotary disc cutter 17.1 can reach any point of the lateral surface of the workpiece P by means of a movement along the first numerically controlled translation axis X, in combination with the rotation of the workpiece P about the axis A2.

As can be easily understood from Figs. 4(A)-6(B), the mutual position between the tool and the pairs of support and rotation members consisting by way of example of the two headstock and tailstock pairs 21, 23; 25,27 can change as a function of the number of workpieces (one or two) that are machined simultaneously. In the case in which two workpieces are machined simultaneously (Figs. 4(A), 5(A), 6(A)), the relative position between the support and rotation unit (19) and the tool being machined is preferably such that the centerline of the machining tool (median plane of the cylindrical 13.1, or plane containing the rotation axis of the tool 17.1) is in an intermediate position between the rotation axes A1, A2 of the headstock and tailstock pairs. When, vice versa, a single workpiece is machined (Figs. 4(B), 5(B), 6(B)) the mutual position between tool and support and rotation unit is such that the tool is aligned with the axis A1 or A2 on which the workpiece to be machined is mounted and about which it rotates.

Therefore, the support and rotation unit (19) and the machining head or heads with which the turning center is provided are adapted to take at least two mutual positions for machining by a tool, alternatively: a single workpiece supported by a first pair of support and rotation members; or a pair of workpieces supported by the first pair of support and rotation members (21, 23) and by the second pair of support and rotation members (25, 27).

As mentioned previously, when a single workpiece P is machined at a time, the headstock and tailstock pair not used (in the example headstock 21 and tailstock 23) can be removed to prevent collisions with the tools. In other embodiments, the headstock 21 and the tailstock 23 can be provided with an advancing and retracting movement, for example with a pneumatic control. The advancing and retracting movement can be provided only for one of the two pairs of support and rotation members, or for both pairs of support and rotation members.

Although in the illustrated example machining of the single workpiece P takes place between the headstock 25 and the tailstock 27, leaving the headstock 21 and tailstock 23 idle, it would also be possible to use the headstock 21 and the tailstock 23, leaving the headstock 25 and tailstock 27 idle.

As can be understood in particular from Figs. 4, 5 and 6, the turning center 1 described allows machining operations to be optimized, thus making possible to use a structure adapted for machining large workpieces P also to machine two smaller workpieces P1, P2 simultaneously, substantially doubling the productivity of the turning center 1. With the arrangement of the slides and of the machining heads, of the electrospindle and of the support and rotation unit 19 the machine is compact and hence rigid, with a limited number of actuators.

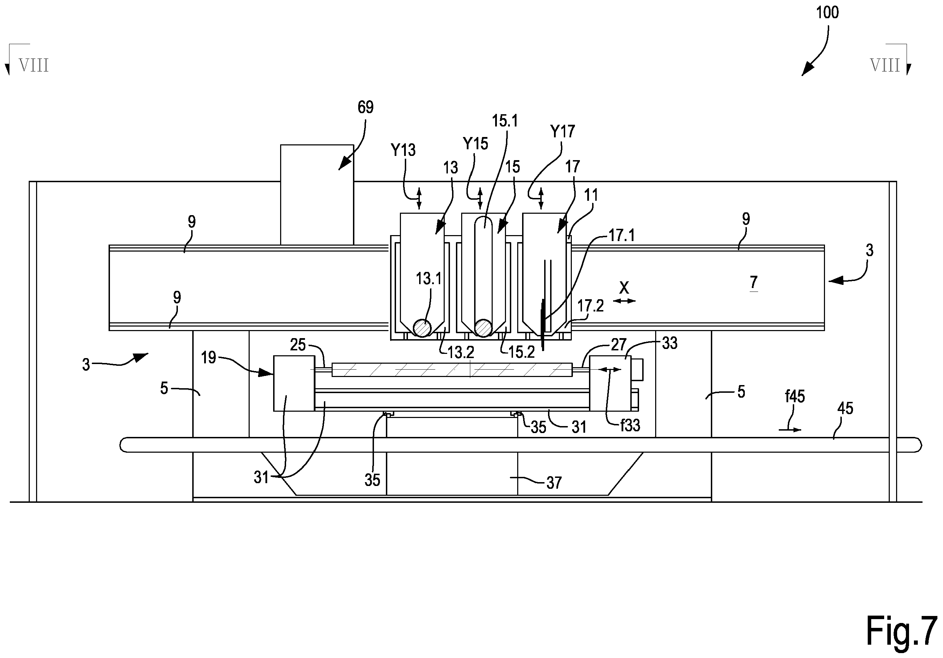

### Embodiment of Figs. 7 to 10

The turning center 1 of Figs. 1 to 6 does not allow the ends of the workpieces P, P1, P2 to be machined, as they are engaged with the headstocks 21, 25 and with the tailstocks 23 and 27 at all times during machining. Therefore, the workpieces P, P1, P2 must be transferred from the turning center 1 to another machine tool to carry out end machining operations.

With the aim of further increasing the capacity of the turning center, so as not to require a separate and additional machine tool to machine the ends of the workpieces P, P1, P2, the turning center can be configured as illustrated in the subsequent Figs. 7, 8, 9 and 10. A part of the turning center of this embodiment, indicated as a whole with 100, is identical to that of the turning center 1 of Figs. 1 to 6 and therefore will not be described again in detail. The same numbers are used in Figs. 7 to indicate the same or equivalent parts to those of the embodiment of Figs. 1 to 6.

More in particular, in the embodiment of Figs.7 to 10, a gantry structure 3 with uprights 5 and cross member 7 is once again provided. The slide 11 that carries one or more machining heads 13, 15 and 17, provided with tools and with movements as described previously, moves thereon according to the first numerically controlled translation axis X.

The support and rotation unit 19 and the support and rotation members of the workpieces P, P1, P2 are substantially configured as in the turning center 1 of Figs. 1 to 6.

Although the turning center 100 of Figs. 7 to 10 has no electrospindle 41, it would be possible to provide an electrospindle 41 on the slide 11 also in the turning center 100.

One of the differences between the turning center 100 and the turning center 1 consists in the fact that the bed 37 of the turning center 100 has in a direction orthogonal to the gantry structure 3, a length greater than the bed 37 of the turning center 1.

Moreover, two slides are provided on the bed 37 of the turning center 100, namely: the second slide 31 that carries the support and rotation unit 19; and a further slide, hereinafter indicated as third slide 61, for the purposes explained below. The slides 31 and 61 can move on the same pair of guides 35 carried by the bed 37, but their movements along these guides is controlled by means of two independent numerically controlled axes. The numerically controlled translation axis of the slide 31 is once again indicated with Z. Instead, the numerically controlled translation axis of the slide 61, parallel to the axis Z, is indicated with Z1. As the two translation movements Z and Z1 are independent, it is possible to position the slides 31 and 61 along the bed 37 in different positions to each other and independently from each other, the only limit being to avoid collisions between the two slides 31, 61.

The slide 61 comprises support and blocking members of the workpieces P, P1, P2 that are configured to leave the ends of these workpieces free. By way of non-limiting example, in Figs.7 to 10 these blocking members are indicated schematically with 63 and comprise two beams 63.1 at an adjustable distance, extending in a cantilever fashion from the slide 61. For this purpose, each beam 63.1 can be fixed to a slide 63.2 adjustable along guides 63.4 integral with the slide 61 parallel to the cross member 7 and consequently orthogonal to the guides 35 of the bed 37. The double arrow f63 indicates the possibility of adjusting the position of each slide 63.2 and consequently the center-to-center distance between the beams 63.1. In other embodiments, one of the beams 63.1 can be fixed with respect to the slide 61 and the other can be adjustable.

A further difference between the turning center 1 and the turning center 100 consists in that the latter has, along the cross member 7, a second pair of guides 65, parallel to the guides 9 of the slide 11. In the illustrated embodiment, the guides 9 and 65 are arranged on opposite sides of the cross member 7.

A carriage 67 is movable along the guides 65. The movement of the carriage 67 along the guides 65 is controlled by means of a numerically controlled translation axis XI. The numerically controlled translation axis XI is parallel to the first numerically controlled translation axis X, so that the carriage 67 moves parallel to the cross member 7 and consequently parallel to the rotation axes A1, A2 of the two pairs of support and rotation members of the workpieces P, P1, P2.

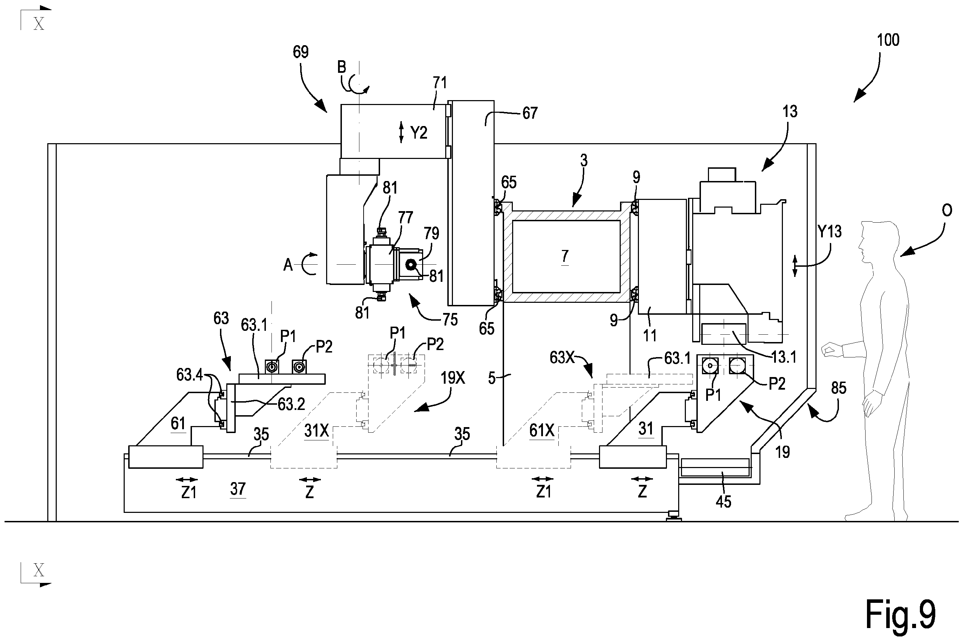

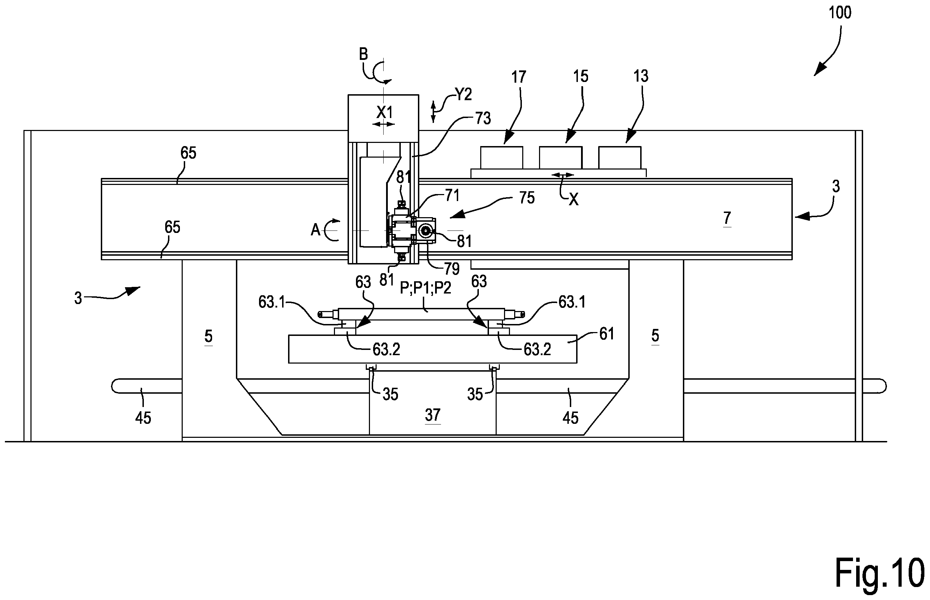

The carriage 67 carries a machining unit 69, which can be provided with one or more spindles for machining the workpieces P, P1, P2 when these are located on one or on the other of the two slides 31 and 61. In the illustrated embodiment, the machining unit 69 has a slide 71 movable vertically according to a translation axis Y2, see in particular Figs. 9 and 10. The movement along Y2 can be a numerically controlled movement and therefore the axis Y2 can be a numerically controlled translation axis. The slide 71 can be guided along guides 73 integral with the carriage 67.

In the illustrated exemplary embodiment, a machining head 75 that carries two electrospindles 77, 79 oriented at 90° one with respect to the other and forming a crosshead, is mounted on the slide 71 of the machining unit 69. In the illustrated example each electrospindle 77, 79 is double, i.e., can carry two coaxial and opposed tools. The four tool holders of the two double electrospindles 77, 79 are indicated with 81.

In other embodiments, the machining head 75 can comprise a different configuration, for example with a single spindle or with two spindles. If necessary, a tool magazine and a tool changing device can also be provided, in order to increase the range of machining operations that can be carried out.

In the illustrated embodiment, the machining head 75 has, with respect to the slide 71, two rotation or oscillation movements about respective numerically controlled rotation axes indicated with A and B, so as to be able to select one or other of the four tools attached to the spindle-holder 81 and to incline them suitably with respect to the workpiece to be machined P, P1, P2.

Fig. 9 indicates the end of travel positions that can be taken by the two slides 31 and 61 movable along the bed 37. More in particular, 31 and 31X indicate the end positions that the slide 31 can take and 61 and 61X indicate the end positions that the slide 61 can take.

The turning center 100 illustrated in Figs. 7 to 10 allows a plurality of machining operations to be carried out on all the faces of each workpiece P, P1, P2 with minimum intervention by the operator.

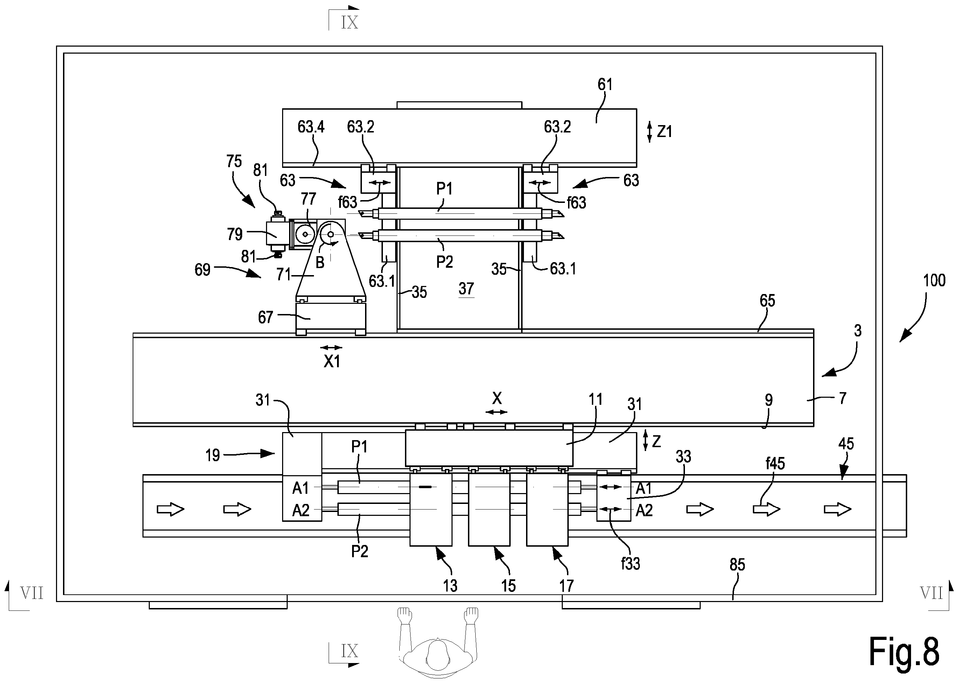

The many machining possibilities offered by the turning center 100 can be understood in particular by observing Figs. 8 and 9. These figures show the simultaneous machining of two smaller workpieces P1, P2, but it is easily understood that the turning center 100 provides the same flexibility and numerous machining operations also for larger workpieces P, which must be machined individually.

As can be observed in particular in Fig.9, two workpieces PI, P2 are mounted on the support and rotation unit 19 carried by the slide 31. These workpieces can be machined by the tools of the machining heads 13, 15, 17 as already described with reference to Figs. 1 to 6, with the exclusion of the machining operations carried out by the electrospindle 41, which in this example of embodiment is not provided.

After the workpieces P1 and P2 have been machined by the tools of the machining heads 13, 15, 17, they are removed from the support and rotation unit 19, carried by the second slide 31, and placed on the third slide 61, where they are fixed on the blocking members 63. Blocking can be of mechanical or pneumatic type, for example, with mechanisms and equipment that are known and not described in detail.

Transfer of the semi-finished workpieces PI, P2 from the support and rotation unit 19 of the second slide 31 to the blocking members 63 of the third slide 61 can be carried out manually by an operator O. However, it would also be possible for the transfer to be carried out automatically, for example by means of a suitably configured robot.

To facilitate the transfer, the slides 31 and 61 can both be carried to the end positions closest to the point of access to the machine by the operator O, i.e., in the case illustrated under the first slide 11. Here the operator O can remove any finished workpieces that are located on the third slide 61, not shown in Fig.9, and transfer the semi-finished workpieces PI, P2 from the support and rotation unit 19 to the third slide 61.

After carrying out this operation, the operator O can place another pair of unworked workpieces PI, P2 on the support and rotation members 21, 23, 25, 27 carried by the support and rotation unit 19.

After terminating these operations, the turning center 100 can be started, after closing the guards, indicated schematically with 85. The third slide 61 translates from the position 31X indicated in Fig.9, to a position under the machining unit 69 where further machining operations can be carried out, for example end machining, by the tools carried by the machining head 75.

Simultaneously, the unworked workpieces PI, P2 that the operator placed on the support and rotation unit 19 can be machined by means of the machining heads 13, 15, 17.

Fig. 9 also shows a position in which the third slide 61 is located at the left end of the bed 37 and in this way allows the second slide 31 to be positioned (position 31X) under the machining head 75. This allows machining operations to be carried out on the workpieces PI, P2 by the tools carried by the two electrospindles 77, 79 of the machining head 75 and which can require rotation of the workpieces PI, P2 about the respective axes A1, A2 of the support and rotation unit. In practice, in this exemplary embodiment, the machining unit 69 with its machining head 75 carries out the machining operations that are carried out by the electrospindle 41 in the turning center 1.

Moreover, as previously mentioned, an electrospindle 41 can also be provided in the turning center 100, in which case machining operations such as boring can be carried out when the slide 31 is under the slide 11 by means of the electrospindle 41.

Once the machining unit 69 has carried out the machining operations on the workpieces PI, P2 that are located on the third slide 61, and possibly the machining operations of the workpieces PI, P2 that are located on the second slide 31, the workpieces can be transferred again as described above: the two slides 31, 61 are carried to the end positions on the right (Fig.9) and the operator removes the finished workpieces P1, P2 from the third slide 61, transfers the semi-finished workpieces P1, P2 from the support and rotation unit 19 of the second slide 31 to the third slide 61 and loads unworked workpieces PI, P2 onto the support and rotation unit 19.

To further increase the productivity of the turning center, both in the version of Figs. 1 to 6 (turning center 1), and in the version of Figs. 7 to 10 (turning center 100), it would also be possible for the turning center to have a double system of slides 31 and a double system of slides 61 (in the version of Figs. 7 to 10) and two beds 37 parallel to one another, positioned underneath a single cross member of a gantry structure 3. The travel of the machining heads 13, 15, 17 along the first numerically controlled translation axis X, and optionally of the machining unit 69 along the numerically controlled translation axis XI, are such as to allow the workpieces mounted alternatively on one or on the other of the two slides 31, or of the two slides 61 (if present) to be machined in a pendulum cycle. In this way, while one of the slides 31 (and optionally one of the slides 61, if present) supports the workpieces being machined, machined workpieces are unloaded and unworked workpieces are loaded onto the other slide 31 (and optionally semi-finished workpieces are transferred from the slide 31 to the other slide 61).

## Claims

1. A numerically controlled turning center (1; 100), comprising:
a load-bearing gantry structure (3), with a horizontal cross member (7) and two uprights (5);
a first slide (11) movable along the cross member (7) according to a first numerically controlled translation axis (X);
at least a first machining head (13, 15, 17) carried by the first slide (11) and comprising a first downward facing rotary tool (13.1, 15.1, 17.1) for chip removal machining;
a second slide (31), positioned under the cross member (7) and movable along a second horizontal, preferably numerically controlled, translation axis (Z) and orthogonal to the first numerically controlled translation axis (X);
a support and rotation unit (19), adapted to support a workpiece to be machined (P1, P2, P) and to impart thereto a rotation movement about a turning axis;
wherein the support and rotation unit (19) is carried by the second slide (31) and comprises a first pair of support and rotation members (21, 23) for a workpiece to be machined (P1, P2, P), aligned with each other along a first rotation axis (A1) parallel to the cross member (7), orthogonal to the second translation axis (Z) and positioned lower than the cross member (7); and wherein the first machining head (13, 15, 17) is provided with a lowering and lifting movement (Y13, 15, Y17) for moving toward and away from the support and rotation unit (19).

2. The turning center (1; 100) of claim 1, wherein the second slide (31) is mounted movable on guides (35) carried by a bed (37) positioned under the cross member (7).

3. The turning center (1; 100) of claim 2, wherein the support and rotation unit (19) is mounted on the second slide (31) so that the support and rotation members (21, 23, 25, 27) are arranged cantilevered with respect to the second slide (31).

4. The turning center (1; 100) of claim 3, wherein, in operating position, the support and rotation members (21, 23, 25, 27) are positioned by means of the second slide (31) so as to be cantilevered with respect to the bed (37).

5. The turning center (1; 100) of one or more of the preceding claims, wherein the support and rotation unit (19) comprises a second pair of support and rotation members (25, 27) of a workpiece to be machined (P1, P2, P), aligned with each other along a second rotation axis (A2), parallel to the first rotation axis (A1); and wherein preferably the first rotation axis (A1) of the first pair of support and rotation members (21, 23) and the second rotation axis (A2) of the second pair of support and rotation members lie on a substantially horizontal plane, underneath the cross member (7).

6. The turning center (1; 100) of claim 5, wherein at least one of the first pair of support and rotation members (21, 23) and second pair of support and rotation members (25, 27) is retractable in a non-operating position.

7. The turning center (1; 100) of one or more of the preceding claims, further comprising a conveyor (45) for collecting the machining chips, under the support and rotation unit (19), preferably approximately parallel or approximately orthogonal to the cross member (7).

8. The turning center (1; 100) of one or more of the preceding claims, wherein the rotary tool (13.1, 15.1, 17.1) of the first machining head (13, 15, 17) rotates about an axis oriented approximately at 90° with respect to the first rotation axis (A1) of the first pair of support and rotation members (21, 23) and approximately parallel to the second numerically controlled translation axis (Z).

9. The turning center (1; 100) of one or more of the preceding claims, comprising at least a second machining head (13, 15, 17), comprising a second rotary tool (13.1, 15.1, 17.1) for chip removal machining; the second machining head having a lowering and lifting movement (Y13, Y15, Y17) to move toward and away from the support and rotation unit (19); wherein the second rotary tool (13.1, 15.1, 17.1) preferably has a rotation axis parallel or orthogonal to the first rotation axis (A1) of the first pair of support and rotation members (21, 23) and approximately horizontal; and wherein the second machining head (13, 15, 17) is preferably carried by the first slide (11).

10. The turning center (1; 100) of one or more of the preceding claims, further comprising an electrospindle (41) for a further rotary tool, rotating about an axis adapted to take an orientation orthogonal to the first translation axis (X) and to the second translation axis (Z); and wherein the electrospindle (41) is preferably provided with at least one numerically controlled rotation axis (C).

11. The turning center (1; 100) of claim 10, wherein the electrospindle (41) is provided with a lowering and lifting movement (Y41) to move toward and away from the support and rotation unit (19); and wherein the electrospindle (41) is further provided with a translation movement parallel to the cross member (7).

12. The turning center (1; 100) of claim 11, wherein said electrospindle is carried by the first slide (11).

13. The turning center (100) of one or more of the preceding claims, comprising a third slide (61), movable parallel to the second slide (31) and adapted to translate under the cross member (7); wherein the movements of the second slide (31) and of the third slide (61) are controlled according to two numerically controlled translation axes (Z, Z1) independent from and parallel to each other; wherein the third slide (61) comprises support and blocking members (63) of the workpieces to be machined (P, PI, P2) adapted to leave the ends of the workpieces to be machined free.

14. The turning center (100) of claim 13, wherein the third slide (61) is movable along a bed (37) that extends beyond the gantry structure (3), on one side of the gantry structure (3) opposite the side on which the first machining head (13, 15, 17) is carried; and wherein preferably the second slide (31) and the third slide (61) are movable along a common bed (37).

15. The turning center (100) of claim 13 or 14, wherein the cross member (7) carries a machining unit (69) comprising at least one spindle (77, 79) movable according to a plurality of numerically controlled translation axes, the machining unit (69) being carried on the side of the cross member (7) opposite the side on which the first machining head (13, 15, 17) is carried and being movable according to a numerically controlled translation axis (X 1) parallel to the cross member (7).

16. The turning center (100) of claim 15, wherein the spindle (77, 79) of the machining unit (69) is movable about at least one numerically controlled rotation axis and preferably about two numerically controlled rotation axes (A, B) not parallel to each other; and wherein the spindle (77, 79) of the machining unit (69) is also preferably movable along one and more preferably two numerically controlled translation axes, preferably orthogonal to each other.

## Patentansprüche

1. Numerisch gesteuertes Drehzentrum (1; 100) mit:
einer Last-lagernden Portalstruktur (3) mit einem horizontalen Querelement (7) und zwei Ständern (5),
einem ersten Schlitten (11), der entlang des Querelements (7) entsprechend einer ersten numerisch gesteuerten Translationsachse (X) bewegbar ist,
mindestens einem Bearbeitungskopf (13, 15, 17), der durch den ersten Schlitten (11) getragen wird und mindestens ein nach unten gerichtetes Drehwerkzeug (3.1, 15.1, 17.1) für eine Spanentfernungsbearbeitung aufweist,
einem zweiten Schlitten (31), der unter dem Querelement (7) positioniert ist und entlang einer zweiten horizontalen, vorzugsweise numerisch gesteuerten Translationsachse (Z), die orthogonal zu den ersten numerisch gesteuerten Translationsachse (X) ist, bewegbar ist,
einer Träger- und Dreheinheit (19), die ausgebildet ist, um ein zu bearbeitendes Werkstück (P1, P2, P) zu tragen und ihm eine Drehbewegung um eine Drehachse zu vermitteln,
wobei die Träger- und Dreheinheit (19) von dem zweiten Schlitten (31) getragen wird und ein erstes Paar von Träger- und Drehelementen (21, 23) für ein zu bearbeitendes Werkstück (P1, P2, P) aufweist, die zueinander entlang einer ersten Drehachse (A1) ausgerichtet sind, parallel zu dem Querelement (7), orthogonal zu der zweiten Translationsachse (Z) und tiefer als das Querelement (7) positioniert, und wobei der erste Bearbeitungskopf (13, 15, 17) mit einer Absenk- und Hubbewegung (Y13, 15 Y17) zur Bewegung zu der Träger-und Dreheinheit (19) und von ihr weg versehen ist.

2. Drehzentrum (1; 100) nach Anspruch 1, wobei der zweite Schlitten (31) auf bewegbaren Führungen (35) montiert ist, die auf einem Bett (37) getragen werden, das unter dem Querelement (7) angeordnet ist.

3. Drehzentrum (1; 100) nach Anspruch 2, wobei die Träger- und Dreheinheit (19) auf dem zweiten Schlitten (31) montiert ist, sodass die Träger- und Drehelemente (21, 23, 25, 27) freitragend mit Bezug auf den zweiten Schlitten (31) angeordnet sind.

4. Drehzentrum (1; 100) nach Anspruch 3, wobei in einer Bearbeitungsposition die Träger- und Drehelemente (21, 23, 25, 27) mittels des zweiten Schlittens (31) so positioniert sind, dass sie mit Bezug auf das Bett (37) freitragend sind.

5. Drehzentrum (1; 100) nach einem oder mehreren der vorstehenden Ansprüche, wobei die Träger- und Dreheinheit (19) ein zweites Paar von Träger- und Drehelementen (25, 27) eines zu bearbeitenden Werkstücks (P1, P2, P) aufweist, die zueinander entlang einer zweiten Drehachse (A2), parallel zu den ersten Drehachse (A1) ausgerichtet sind, und wobei vorzugsweise die erste Drehachse (A1) des ersten Paares von Träger- und Drehelementen (21, 23) und die zweite Drehachse (A2) des zweiten Paares von Träger- und Drehelementen in einer im Wesentlichen horizontalen Ebene unter dem Querelement (7) liegen.

6. Drehzentrum (1; 100) nach Anspruch 5, wobei mindestens eines des ersten Paares von Träger- und Drehelementen (21, 23) und des zweiten Paares von Träger- und Drehelementen (25, 27) in einer Nicht-Betriebs-Position einziehbar ist.

7. Drehzentrum (1; 100) nach einem oder mehreren der vorstehenden Ansprüche mit ferner einem Förderer (45) zum Sammeln der Bearbeitungsspäne unter der Träger- und Dreheinheit (90), vorzugsweise in etwa parallel oder annähernd orthogonal zu dem Querelement (7).

8. Drehzentrum (1; 100) nach einem oder mehreren der vorstehenden Ansprüche, wobei das Drehwerkzeug (13.1, 15.1, 17.1) des Bearbeitungskopfes (13, 15, 17) sich um eine Achse dreht, die etwa bei 90° mit Bezug auf die erste Drehachse (A1) des ersten Paares von Träger- und Drehelementen (21, 23) orientiert ist und etwa parallel zu der zweiten numerisch gesteuerten Translationsachse (Z).

9. Drehzentrum (1; 100) nach einem oder mehreren der vorstehenden Ansprüche mit mindestens einem zweiten Bearbeitungskopf (13, 15, 17) mit einem zweiten Drehwerkzeug (13.1, 15.1, 17.1) zur Spannentfernungsbearbeitung, wobei der zweite Bearbeitungskopf eine Absenkungs- und Hubbewegung (Y13, Y15, Y17) aufweist, um sich zu und weg von der Träger- und Dreheinheit (19) zu bewegen, wobei das zweite Drehwerkzeug (13.1, 15.1, 17.1) vorzugsweise eine Drehachse parallel oder orthogonal zu der ersten Drehachse (A1) des ersten Paares von Träger- und Drehelementen (21, 23) aufweist und etwa horizontal, und wobei der zweite Bearbeitungskopf (13, 15, 17) vorzugsweise von dem ersten Schlitten (11) getragen wird.

10. Drehzentrum (1; 100) nach einem oder mehreren der vorstehenden Ansprüche mit ferner einer Elektrospindel (41) für ein weiteres Drehwerkzeug, die um eine Achse dreht, die ausgebildet ist, um eine Orientierung orthogonal zu der ersten Translationsachse (X) und der zweiten Translationsachse (Z) anzunehmen, und wobei die Elektrospindel (41) vorzugsweise mit mindestens einer numerisch gesteuerten Drehachse (C) versehen ist.

11. Drehzentrum (1; 100) nach Anspruch 10, wobei die Elektrospindel (41) mit einer Absenk- und Hubbewegung (Y41) versehen ist, um sich zu und weg von der Träger- und Dreheinheit (19) zu bewegen, wobei die Elektrospindel (41) ferner mit einer Translationsbewegung parallel zu dem Querelement (7) versehen ist.

12. Drehzentrum (1; 100) nach Anspruch 11, wobei die Elektrospindel durch den ersten Schlitten (11) getragen wird.

13. Drehzentrum (100) nach einem oder mehreren der vorstehenden Ansprüche mit einem dritten Schlitten (61), der parallel zu dem zweiten Schlitten (31) bewegbar ist und ausgebildet ist, um sich unter dem Querelement (7) zu bewegen, wobei die Bewegungen des zweiten Schlitten (31) und des dritten Schlitten (61) entsprechend zweier numerisch gesteuerten Translationsachse (Z, Z!) Unabhängig voneinander und parallel zueinander gesteuert werden, wobei der dritte Schlitten (61) Träger-und Blockierelemente (63) für zu bearbeitende Werkstücke (P, P1, P2) aufweist, die ausgebildet sind, um die Enden der Werkstücke frei zu bearbeiten.

14. Drehzentrum (100) nach Anspruch 13, wobei der dritte Schlitten (61) entlang eines Bettes (37) bewegbar ist, das sich über die Portalstruktur (3) an einer Seite der Portalstruktur (3) gegenüber der ersten Seite, an der der Bearbeitungskopf (13, 15, 17) getragen wird, erstreckt, und wobei vorzugsweise der zweite Schlitten (31) und der dritte Schlitten (61) entlang eines gemeinsamen Bettes (37) bewegbar sind.

15. Drehzentrum nach Anspruch 13 oder 14, wobei das Querelement (7) eine Bearbeitungseinheit (69) mit mindestens einer Spindel (77, 79) aufweist, die entsprechend einer Anzahl von numerisch gesteuerten Translationsachsen bewegbar ist, wobei die Bearbeitungseinheit (69) an der Seite des Querelements (7) getragen wird, die gegenüber der Seite ist, an der der erste Bearbeitungskopf (13, 15, 17) getragen wird und die entsprechend einer numerisch gesteuerten Translationsachse (X1) parallel zu dem Querelement (7) bewegbar ist.

16. Drehzentrum (100) nach Anspruch 15, wobei die Spindel (77, 79) der Bearbeitungseinheit (69) um etwa mindestens eine numerisch gesteuerten Drehachse und vorzugsweise um zwei numerisch gesteuerte Drehachsen (A, B) bewegbar ist, die nicht parallel zueinander sind, und wobei die Spindel (77, 79) der Bearbeitungseinheit (69) auch vorzugsweise entlang einer und weiter vorzuziehen entlang zweier numerisch gesteuerten Translationsachsen bewegbar ist, die vorzugsweise orthogonal zueinander sind.

## Revendications

1. Un tour à commande numérique (1; 100), comprenant :
une structure portante porte-charge (3), avec un organe horizontal transversal (7) et deux montants (5) ;
un premier coulisseau (11) déplaçable le long de l'organe transversal (7) suivant un premier axe de déplacement commandé numériquement (X) ;
au moins une première tête d'usinage (13, 15, 17) portée par le premier coulisseau (11) et comprenant un premier outil rotatif tourné vers le bas (13.1, 15.1, 17.1) pour un usinage par enlèvement de copeaux ;
un deuxième coulisseau (31), positionné sous l'organe transversal (7) et déplaçable le long d'un deuxième axe de déplacement (Z) horizontal de préférence commandé numériquement et perpendiculaire au premier axe de déplacement commandé numériquement (X) ;
une unité de support et de rotation (19), apte à supporter une pièce à usiner (P1, P2, P) et à l'animer d'un mouvement de rotation autour d'un axe de rotation ;
dans lequel l'unité de support et de rotation (19) est portée par le deuxième coulisseau (31) et comprend une première paire d'organes de support et de rotation (21, 23) pour une pièce à usiner (P1, P2, P), aligné les uns sur les autres le long d'un premier axe de rotation (A1) parallèle à l'organe transversal (7), perpendiculaire au second axe de translation (Z) et positionné plus bas que l'organe transversal (7) ; et dans lequel la première tête d'usinage (13, 15, 17) est pourvue d'un mouvement de descente et de montée (Y13, Y15, Y17) pour un rapprochement et un éloignement de l'unité de support et de rotation (19).

2. Le tour (1; 100) selon la revendication 1, dans lequel le deuxième coulisseau (31) est monté mobile sur des guides (35) portés par une base (37) positionnée sous l'organe transversal (7).

3. Le tour (1; 100) selon la revendication 2, dans lequel l'unité de support et de rotation (19) est monté sur le deuxième coulisseau (31) de sorte que les organes de support et de rotation (21, 23, 25, 27) soient agencés en porte-à-faux par rapport au deuxième coulisseau (31).

4. Le tour (1; 100) selon la revendication 3, dans lequel, dans en position de fonctionnement, les organes de support et de rotation (21, 23, 25, 27) sont positionnés au moyen du deuxième coulisseau (31) de manière à être en porte-à-faux par rapport à la base (37).

5. Le tour (1; 100) selon l'une ou plusieurs des revendications précédentes, dans lequel l'unité de support et de rotation (19) comprend une deuxième paire d'organes de support et de rotation (25, 27) d'une pièce à usiner (P1, P2, P), alignés les uns sur les autres le long d'un deuxième axe de rotation (A2), parallèle au premier axe de rotation (A1) ; et dans lequel de préférence le premier axe de rotation (A1) de la première paire d'organes de support et de rotation (21, 23) et le deuxième axe de rotation (A2) de la deuxième paire d'organes de support et de rotation se trouvent sur un plan sensiblement horizontal, en dessous de l'organe transversal (7).

6. Le tour (1; 100) selon la revendication 5, dans lequel au moins l'une des première paire d'organes de support et de rotation (21, 23) et deuxième paire d'organes de support et de rotation (25, 27) est rétractable dans une position de non fonctionnement.

7. Le tour (1; 100) selon l'une ou plusieurs des revendications précédentes comprenant en outre un convoyeur (45) pour collecter les copeaux d'usinage, sous l'unité de support et de rotation (19), de préférence approximativement parallèle ou approximativement perpendiculaire à l'organe transversal (7).

8. Le tour (1 ; 100) selon l'une ou plusieurs des revendications précédentes, dans lequel l'outil rotatif (13.1, 15.1, 17.1) de la première tête d'usinage (13, 15, 17) tourne autour d'un axe orienté approximativement à 90° par rapport au premier axe de rotation (A1) de la première paire d'organes de support et de rotation (21, 23) et approximativement parallèle au deuxième axe de déplacement commandé numériquement (Z).

9. Le tour (1 ; 100) selon l'une ou plusieurs des revendications précédentes, comprenant au moins une deuxième tête d'usinage (13, 15, 17) comprenant un deuxième outil rotatif (13.1, 15.1, 17.1) pour l'usinage par enlèvement de copeaux ; la deuxième tête d'usinage ayant un mouvement de descente et de montée (Y13, Y15, Y15) pour se rapprocher et s'éloigner de l'unité de support et de rotation (19) ; dans lequel le deuxième outil rotatif (13.1, 15.1, 17.1) a de préférence un axe de rotation parallèle ou perpendiculaire au premier axe de rotation (A1) de la première paire d'organes de support et de rotation (21, 23) et approximativement horizontal ; et dans lequel la deuxième tête d'usinage (13, 15, 17) est de préférence portée par le premier coulisseau (11).

10. Le tour (1; 100) selon l'une ou plusieurs des revendications précédentes, comprenant en outre une broche électrique (41) pour un outil rotatif supplémentaire, tournant autour d'un axe apte à prendre une orientation perpendiculaire au premier axe de déplacement (X) et au deuxième axe de déplacement (Z) ; et dans lequel la broche électrique (41) est de préférence munie d'au moins un axe de rotation (C) commandé numériquement.

11. Le tour (1; 100) selon la revendication 10, dans lequel la broche électrique (41) est animée d'un mouvement de descente et de montée (Y41) pour se rapprocher et s'éloigner de l'unité de support et de rotation (19) ; et dans lequel la broche électrique (41) est en outre animée d'un mouvement de déplacement parallèle à l'organe transversal (7).

12. Le tour (1; 100) selon la revendication 11, dans lequel ladite broche électrique est portée par le premier coulisseau (11).

13. Le tour (100) selon l'une ou plusieurs des revendications précédentes, comprenant un troisième coulisseau (61), déplaçable parallèlement au deuxième coulisseau (31) et apte à se déplacer sous l'organe transversal (7) ; dans lequel les mouvements du deuxième coulisseau (31) et du troisième coulisseau (61) sont commandés suivant deux axes de déplacement (Z, Z1) commandés numériquement et indépendants l'un de l'autre et parallèles l'un à l'autre ; dans lequel le troisième coulisseau (61) comprend des organes de support et de blocage (63) des pièces à usiner (P, P1, P2) aptes à laisser libres les extrémités des pièces à usiner.

14. Le tour (100) selon la revendication 13, dans lequel le troisième coulisseau (61) est déplaçable le long d'une base (37) qui s'étend au-delà de la structure formant portique (3), sur un côté de la structure formant portique (3) opposé au côté sur lequel la première tête d'usinage (13, 15, 17) est portée ; et dans lequel de préférence le deuxième coulisseau (31) et le troisième coulisseau (61) sont déplaçables le long d'une base commune (37).

15. Le tour (100) selon la revendication 13 ou 14, dans lequel l'organe transversal (7) porte une unité d'usinage (69) comprenant au moins une broche (77, 79) déplaçable suivant une pluralité d'axes de déplacement commandés numériquement, l'unité d'usinage (69) étant portée sur le côté de l'organe transversal (7) à l'opposé du côté sur lequel la première tête d'usinage (13, 15, 17) est portée et étant déplaçable suivant un axe de translation (X1) commandé numériquement parallèle à l'organe transversal (7).

16. Le tour (100) selon la revendication 15, dans lequel la broche (77, 79) de l'unité d'usinage (69) est déplaçable autour d'au moins un axe de rotation commandé numériquement et de préférence autour de deux axes de rotation (A, B) commandés numériquement non parallèles l'un à l'autre ; et dans lequel la broche (77, 79) de l'unité de commande (69) est également de préférence déplaçable le long d'un et plus préférentiellement de deux axes de déplacement commandés numériquement, de préférence perpendiculaires l'un à l'autre.
